# EUROPEAN PATENT APPLICATION

(11) **EP 1 708 482 A2**
(43) Date of publication of application: **04.10.2006**
(21) Application number: 06251694.3
(22) Date of filing: 28.03.2006
(51) Int. Cl.: H04N 1/64, H04N 1/60

(54) **Print control method, print control apparatus, and print control program**

(30) Priority: 29.03.2005 JP 2005095025
(71) Applicant: SEIKO EPSON CORPORATION, Shinjuku-ku, Tokyo 163-0811 (JP)
(72) Inventor: Komagamine, Katsumi, Epson Software Dev. Lab. Inc., Matsumoto-shi Nagano-ken (JP)
(74) Representative: Cloughley, Peter Andrew

(57) **Abstract**

A print control method includes receiving selection of a print condition, and changing an algorithm of a de-mosaic processing according to the print condition when color image data is formed by performing the de-mosaic processing of raw image data obtained by digitizing an output signal of a color area image sensor.

## Description

The disclosure of Japanese Patent Application No. 2005-95025 (filed on March 29, 2005) including the specification, drawings and abstract is incorporated herein by reference.

The present invention relates to a print control method, a print control apparatus, and a print control program.

There is known a digital camera which stores raw image data (so-called RAW data) obtained by digitizing an output signal of a color area image sensor. In general, since each pixel of the raw image data has a tone value of only one channel, a color image can not be printed from the raw image data as it is. In order to print the color image based on the raw image data, it is necessary to form color image data from the raw image data. For example, in the case of the color area image sensor in which primary color filters are Bayer-arranged, each pixel of the raw image data has a tone value of only one channel of RGB. Thus, in order to print the raw image data, it is necessary to form color image data by performing a processing, so-called de-mosaic processing, in which with respect to each pixel, tone values of the other two channels are interpolated by tone values of surrounding pixels and each pixel is made to have tone values of the RGB three channels (see, for example, JP-A-2003-152990). Incidentally, in the present specification, the two-dimensional array of tone values of a luminance signal or the like is called image data, and an object which is displayed based on the image data and can be seen is called an image.

There is known a so-called stand-alone printer in which color image data taken by a digital camera can be printed singly without requiring control by a personal computer (PC) or the like. In order to enable the stand-alone printer to perform printing based on raw image data, it is necessary that the stand-alone printer can perform the de-mosaic processing. However, since an algorithm for forming color image data of high image quality includes many procedures, there is a problem that the de-mosaic processing takes much time.

In printing, priority is not always necessarily given to image quality, and although there is a case where priority is given to image quality, there is also a case where priority is given to print speed. In general, in the stand-alone printer, in the case where priority is given to the print speed, printing is performed by a low image quality printing method, and in the case where priority is given to the image quality, printing is performed by a high image quality printing method. Here, the low image quality printing method specifically indicates, for example, low resolution bidirectional printing or the like, and the high image quality printing method specifically indicates, for example, high resolution unidirectional printing or the like. The stand-alone printer determines, based on a print condition, which printing method is used to perform printing. In the case where printing is performed by the low image quality printing method, even if de-mosaic processing is performed by an algorithm in which color image data of high image quality is formed, since the image quality is lowered at the time of printing, waste occurs in the processing, and further, since the de-mosaic processing takes much time, the printing takes much time. On the other hand, in the case where printing is performed by the high image quality printing method, when de-mosaic processing is performed by an algorithm in which color image data of low image quality is formed, even if printing is performed by the high image quality printing method, only a low quality image is obtained, and it is impossible to satisfy the request of a user.

An advantage of some aspects of the invention exists in the use of a print control method, a print control apparatus and a print control program, in which de-mosaic processing is performed by an algorithm appropriate to a printing method.

(1) A print control method to achieve the above advantage includes receiving selection of a print condition, and changing an algorithm of a de-mosaic processing according to the print condition when color image data is formed by performing the de-mosaic processing of raw image data obtained by digitizing an output signal of a color area image sensor.

According to this aspect of the invention, for example, when the print condition in which printing is performed by a low image quality printing method is selected, a changeover is made to an algorithm in which color image data of low image quality is formed, and when the print condition in which printing is performed by a high image quality printing method is selected, a changeover is made to an algorithm in which color image data of high image quality is formed, and therefore, the de-mosaic processing can be performed by the algorithm appropriate to the printing method. By this, it is possible to eliminate waste in the de-mosaic processing in the case where the color image data is printed by the low image quality printing method, the raw image data can be printed in a short time, and the request of the user who desires high image quality printing can be satisfied.

(2) In the print control method to achieve the advantage, when the algorithm of the de-mosaic processing is changed, a changeover may be made between an algorithm in which color image data of relatively low image quality is formed and an algorithm in which color image data of relatively high image quality is formed.

(3) In the print control method to achieve the advantage, the algorithm in which the color image data of low image quality is formed may be an algorithm in which a surrounding edge of a noted pixel is not considered in interpolation of a tone value of the noted pixel, and the algorithm in which the color image data of high image quality is formed may be an algorithm in which a surrounding edge of a noted pixel is considered in interpolation of a tone value of the noted pixel.

In general, the algorithm in which the surrounding edge is considered can form color image data of relatively high image quality as compared with the algorithm in which the surrounding edge is not considered.

(4) In the print control method to achieve the above advantage, when the algorithm of the de-mosaic processing is changed, in a case where as the print condition, a print condition in which printing is performed at a relatively low resolution is selected, a changeover may be made to an algorithm in which color image data of relatively low image quality is formed, and in a case where as the print condition, a print condition in which printing is performed at a relatively high resolution is selected, a changeover may be made to an algorithm in which color image data of relatively high image quality is formed.

According to this aspect of the invention, in the case where the print condition in which printing is performed at the low resolution is selected, the changeover is made to the algorithm in which the color image data of low image quality is formed, and accordingly, waste in the processing can be eliminated, and the color image can be printed in a short time based on the raw image data. On the other hand, in the case where the print condition in which printing is performed at the high resolution is selected, the changeover is made to the algorithm in which color image data of high image quality is formed, and accordingly, the request of the user who desires high image quality printing can be satisfied.

(5) In the print control method to achieve the advantage, when the algorithm of the de-mosaic processing is changed, in a case where as the print condition, a print condition in which bidirectional printing is performed is selected, a changeover may be made to an algorithm in which color image data of relatively low image quality is formed, and in a case where as the print condition, a print condition in which unidirectional printing is performed is selected, a changeover may be made to an algorithm in which color image data of relatively high image quality is formed.

According to this aspect of the invention, in the case where the print condition in which the bidirectional printing is performed is selected, the changeover is made to the algorithm in which the color image data of low image quality is formed, and accordingly, waste in the processing is eliminated, and the raw image data can be printed in a short time. On the other hand, in the case where the print condition in which the unidirectional printing is performed is selected, the changeover is made to the algorithm in which the color image data of high image quality is formed, and accordingly, the request of the user who desires high quality printing can be satisfied.

(6) In the print control method to achieve the advantage, when the algorithm of the de-mosaic processing is changed, in a case where print speed priority is selected as the print condition, a changeover may be made to an algorithm in which color image data of relatively low image quality is formed, and in a case where image quality priority is selected as the print condition, a changeover may be made to an algorithm in which color image data of relatively high image quality is formed.

According to this aspect of the invention, in the case where the print speed priority is selected, the changeover is made to the algorithm in which the color image data of low image quality is formed, and accordingly, waste in the processing is eliminated, and the raw image data can be printed in a short time. On the other hand, in the case where the image quality priority is selected, the changeover is made to the algorithm in which the color image data of high image quality is formed, and accordingly, the request of the user who desires high image quality printing can be satisfied.

(7) In the print control method to achieve the advantage, when the selection of the print condition is received, selection of a kind of a print medium on which the color image is to be printed is received as the print condition, and at the image formation stage, the algorithm may be changed according to the kind of the print medium.

According to this aspect of the invention, for example, in the case where the print medium on which ink is liable to spread is selected, the changeover is made to the algorithm in which the color image data of low image quality is formed, and accordingly, waste in the processing is eliminated, and the color image can be printed in a short time based on the raw image data. On the other hand, for example, in the case where the print medium on which ink hardly spreads, such as photo print paper, is selected, the changeover is made to the algorithm in which the color image data of high image quality is formed, and accordingly, the request of the user who desires high image quality printing can be satisfied.

(8) A print control apparatus to achieve the advantage includes a reception unit that receives selection of a print condition, and an image formation unit that changes an algorithm of a de-mosaic processing according to the print condition and forms color image data by performing the de-mosaic processing of raw image data obtained by digitizing an output signal of an area image sensor.

According to this aspect of the invention, the de-mosaic processing can be performed by the algorithm appropriate to the printing method.

(9) A print control program product to achieve the advantage causes a computer to function as a reception unit that receives selection of a print condition, and an image formation unit that changes an algorithm of a de-mosaic processing according to the print condition and forms color image data by performing the de-mosaic processing of raw image data obtained by digitizing an output signal of an area image sensor.

According to this aspect of the invention, the de-mosaic processing can be performed by the algorithm appropriate to the printing method.

Incidentally, the respective functions of the plural units included in the invention are realized by hardware resources whose functions are specified by the configuration itself, hardware resources whose functions are specified by programs, or their combination. Besides, the respective functions of the plural units are not limited to what is realized by hardware resources physically independent from each other.
Embodiments of the present invention will now be described by way of further example only and with reference to the accompanying drawings, in which:

Fig. 1 is a schematic view showing a relation between a printing method of an embodiment of the invention and an algorithm.

Fig. 2A is a perspective view showing a printer of an embodiment of the invention, and Fig. 2B is a block diagram showing its hardware structure.

Fig. 3 is a block diagram of a print control program of an embodiment of the invention.

Fig. 4 is a flowchart of an embodiment of the invention.

Hereinafter, the mode for carrying out the invention will be described on the basis of embodiments. Although the embodiments will be described in detail, the invention is not limited to the embodiments, but is recognized as having a considerably wide scope. The true scope of the invention should be determined by referring to the appended claims.

The drawings are depicted in form of schematic views in which embodiments reflecting the principle of the invention are simplified. Many components and details which would be easily understood by one of ordinary skill in the art are omitted so that the invention does not become unclear.

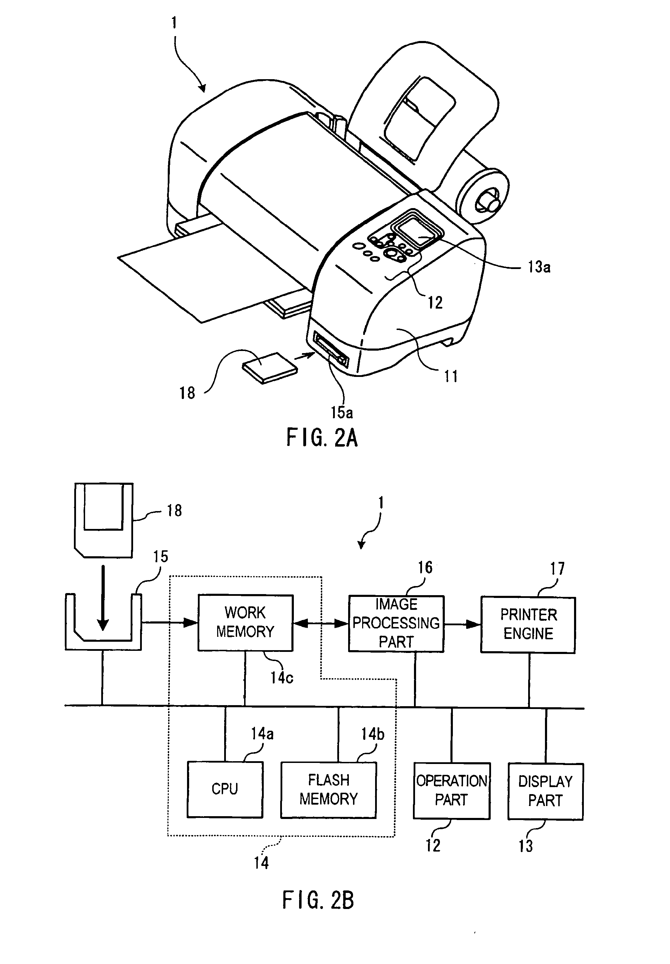

Fig. 2A is a perspective view showing a printer 1 as a print control apparatus of an embodiment of the invention. The printer 1 is a stand-alone printer which can singly print a color image based on raw image data without requiring control of a personal computer or the like. As shown in the figure, a housing 11 of the printer 1 is provided with an operation part 12, an LCD 13a, a card slot 15a and the like. The operation part 12 as a reception unit includes various operation buttons such as a [determination] button, a [cancel] button, and a [print] button.

Fig. 2B is a block diagram showing a hardware configuration of the printer 1.

A display part 13 as the reception unit includes a display controller, the LCD 13a and the like. The display part 13 is controlled by a control part 14, and displays a menu for selection of a print condition and raw image data of a print object, and the like. The displayed menu is operated by the foregoing various operation buttons.

An external storage part 15 includes the card slot 15a in which a removable memory 18 is inserted, a connection terminal to which the removable memory 18 inserted in the card slot 15a is attachably/detachably connected, a memory controller and the like.

An image processing part 16 is an ASIC to create print data based on color image data formed by de-mosaic processing. Specifically, the image processing part 16 performs, in cooperation with the control part 14, for example, conversion of the color space of the color image data formed by the de-mosaic processing, white balance correction, gamma correction, color balance adjustment, sharpness adjustment, contrast adjustment, resolution conversion to convert the resolution of the color image data to a print resolution, binarization processing to binarize the color image data, interlace processing to rearrange the binarized color image data in the order of transfer to a printer engine 17 and to create the print data, and the like. It is the matter of design choice which of the control part 14 and the image processing part 16 performs these processings. Besides, the control part 14 and the image processing part 16 may perform the de-mosaic processing in cooperation with each other. For example, since the format of raw image data varies according to the manufacturer of a digital camera and each model, the control part 14 performs processing to convert the format of the raw image data to a specified format, and the raw image data after the conversion to the specified format may be subjected to the de-mosaic processing by the image processing part 16. In this case, the algorithm is changed at the ASIC side, and the de-mosaic processing is performed. Besides, for example, all processings relating to the de-mosaic processing may be performed in the control part 14. In this embodiment, a description will be given to, as an example, the case in which all processings relating to the de-mosaic processing are performed in the control part 14. Besides, for example, the white balance correction may be performed on the raw image data before the de-mosaic processing is performed.

The printer engine 17 prints an image on a print medium, such as a paper, based on the print data created by the image processing part 16. The printer engine 17 includes a carriage on which a print head is mounted, a drive mechanism to reciprocate the carriage, a transport mechanism to transport the print medium, and the like, and they are controlled by the control part 14. In addition to the print head, plural ink tanks containing inks to be discharged by the print head are mounted on the carriage for respective colors. The printer engine 17 may be such that an image is printed by, for example, a laser system or a dot impact system.

The control part 14 includes a CPU 14a, a flash memory 14b, and a work memory 14c. The CPU 14a executes a program stored in the flash memory 14b and controls the whole of the printer 1. Besides, the CPU 14a executes a print control program stored in the flash memory 14b and functions also as the reception unit and an image formation unit. The flash memory 14b is a memory to store various programs and data, and the work memory 14c is a memory to temporarily store various programs and data. These various programs and data may be downloaded and inputted from a specified server through a network, or may be read and inputted from a computer readable storage medium such as the removable memory 18.

Next, the raw image data will be described. The raw image data is generally data obtained by simply digitizing an output signal of a color area image sensor. The format of the raw image data is not fixed, and can be freely determined by a manufacturer. For example, in JPEG format color image data, since each channel of YCbCr is limited to 8 bits, immediately after the analog output signal of the color area image sensor is digitized, information of a color tone captured in, for example, 12 to 16 bits can not be completely held, and the deterioration of image quality can not be avoided because of irreversible compression. On the other hand, it is not necessary to provide the limitation of 8 bits in the raw image data, and it is not necessary to perform the irreversible compression. Thus, when the image information is stored as the raw image data, the image information can be stored without reducing the information amount of digital representation. Incidentally, in the raw image data, a part of processing to be performed by the image processing part 16 may have been already performed by the digital camera side.

Next, the de-mosaic processing will be described. The de-mosaic processing is the processing to form the color image data from the raw image data, and is basically the processing to interpolate, with respect to each pixel of the raw image data, tone values of two channels by tone values of surrounding pixels, and to cause each pixel to have tone values of three RGB channels. In the de-mosaic processing, in order to suppress false color and moire, a correction processing associated with the interpolation can also be executed such that a low pass filter is applied to a color difference component after the interpolation. In the case where the low pass filter is applied to the color difference component, the direction of an edge of luminance components is detected, and the application range of the filter can be dynamically changed in accordance with the direction of the edge of the luminance components.

As the algorithm of the interpolation processing, there is known, for example, a bi-linear method in which color image data can be formed in a short time although image quality is low, or a VNG (Variable Number of Gradients) method in which color image data of high image quality can be formed although it takes time. The bi-linear method is a method in which a tone value of a noted pixel is interpolated by an average value of tone values of nearby pixels in a relatively narrow range, for example, the upper, lower, right and left four pixels, or the upper-left, upper-right, lower-left, and lower-right four pixels. In the bi-linear method, the number of nearby pixels to which reference is made is small, and the calculation is relatively simple. Thus, in the bi-linear method, the number of procedures is small, and the color image data can be formed in a short time as compared with the VNG method. However, in the bi-linear method, moire and false color are liable to occur, and further, the color image data is smoothed and the sharpness is lacking, and therefore, there is a defect that image quality is relatively low as compared with the VNG method. The VNG method is a method in which a tone value of a noted pixel is interpolated in consideration of edges in the upper, lower, left, right, upper-left, upper-right, lower-left and lower-right eight directions. Here, the edge is a place where the tone is abruptly changed. In general, when reference is made to nearby pixels in a wide range to some extent, a more appropriate tone value can be set as compared with the case where reference is made to nearby pixels in a narrow range, and color image data of high image quality can be created. In the VNG method, reference is made to nearby pixels in a wider range as compared with the bi-linear method, and further, the edge is considered, and accordingly, relatively sharp color image data of high image quality can be formed. However, in the VNG method, the number of nearby pixels to which reference is made is large as compared with the bi-linear method, and further, the edges in the eight directions are considered for each noted pixel, and therefore, calculation is more complicated. Thus, the VNG method has many procedures, and there is a defect that it takes much time as compared with the bi-linear method.

Next, a relation among a print condition, an algorithm of a de-mosaic processing, and a printing method will be described.

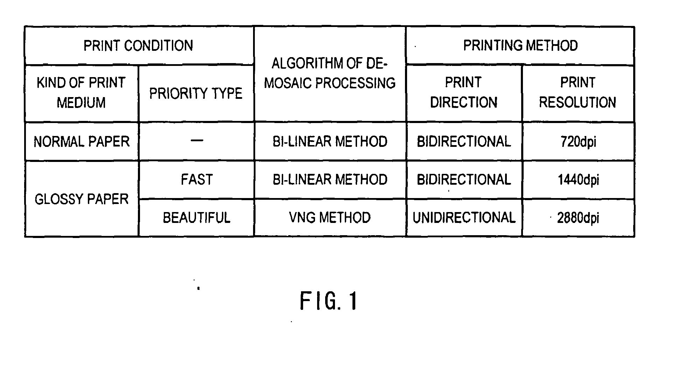

Fig. 1 is a schematic view showing the relation among the print condition, the algorithm of the de-mosaic processing, and the printing method. The print condition is information for determining the printing method of a printer. In this embodiment, a description will be made while the kind of a print medium, and priority type to specify print speed priority or image quality priority are used as an example of the print condition.

As the kind of the print medium, "normal paper" or "glossy paper" can be selected. In the "normal paper", since ink is liable to spread, even if color image data of high image quality is printed, merely color image data of low image quality is obtained. That is, the "normal paper" is the print medium of low quality as compared with the "glossy paper". When the "normal paper" is selected, the printer 1 performs bidirectional printing at a low resolution of 720 dpi or the like. Here, the bidirectional printing is the printing method in which ink is discharged in both a going path and a returning path of the print head, and the image quality is reduced since a color shift occurs between the going path and the returning path or the positions of dots are shifted. However, since ink is discharged in both the going path and the returning path, the printing can be performed in a short time. Besides, the printing is performed at a low resolution, the number of dots of discharge is small, and the printing can be performed in a shorter time. However, the number of dots is small, the image becomes rough, and the image quality is lowered. That is, the bidirectional printing at the low resolution is the low image quality printing method. As stated above, when the "normal paper" is selected, the printer 1 performs printing by the low image quality printing method. However, when the de-mosaic processing is performed by the VNG method, waste occurs in the processing, and further, the VNG method takes much time to perform the processing, the printing takes much time. Then, when the "normal paper" is selected, the printer 1 performs the de-mosaic processing by the bi-linear method. By this, waste in the de-mosaic processing can be eliminated in the case where the color image data is printed by the low image quality printing method, and the raw image data can be printed in a short time. The "normal paper" corresponds to "print condition in which printing is performed at a low resolution" recited in the claims. The "print condition in which printing is performed at a low resolution" may be such that the resolution, for example, 720 dpi is directly specified. Further, the "normal paper" corresponds to "print condition in which bidirectional printing is performed" recited in the claims. The "print condition in which bidirectional printing is performed" may be such that for example, the bidirectional printing is directly specified.

In the case where the "glossy paper" is selected, printing is performed by a printing method corresponding to the priority type.

As the priority type, "fast" or "beautiful" can be selected. When the "fast" is selected, the printer 1 performs the bidirectional printing at a medium resolution such as 1440 dpi. The bidirectional printing at the medium resolution is the low image quality printing method. However, when the de-mosaic processing is performed by the VNG method, waste occurs in the processing, and the printing takes time. Thus, when the "fast" is selected, the printer 1 performs the de-mosaic processing by the bi-linear method. By this, waste in the de-mosaic processing can be eliminated in the case where printing is performed by the low image quality printing method, and the color image can be printed in a short time based on the raw image data. The "fast" corresponds to "print speed priority" recited in the claims. Besides, the "fast" corresponds to "print condition in which printing is performed at a low resolution" recited in the claims. The "print condition in which printing is performed at a low resolution" may be such that the resolution, for example, 1440 dpi is directly specified. Further, the "fast" corresponds to "print condition in which bidirectional printing is performed" recited in the claims.

When the "beautiful" is selected, the printer 1 performs unidirectional printing at a high resolution of 2880 dpi or the like. In the unidirectional printing, a color shift and a dot shift hardly occur, and the printing can be performed at high image quality. That is, the unidirectional printing at the high resolution is a high quality printing method. When the user desires to print a color image at high image quality, he/she selects the "beautiful", and when the "beautiful" is selected, the printer 1 prints the color image by the high image quality printing method as described above. However, when the de-mosaic processing is performed by the bi-linear method, even if the printer 1 performs the printing by the high image quality printing method, the obtained color image comes to have low image quality, and the request of the user can not be satisfied. Then, when the "beautiful" is selected, the printer 1 performs the de-mosaic processing by the VNG method. By this, the request of the user who desires the high image quality printing can be satisfied. The "beautiful" corresponds to "image quality priority" recited in the claims. Besides, the "beautiful" corresponds to "print condition in which printing is performed at a high resolution" recited in the claims. The "print condition in which printing is performed at a high resolution" may be such that the resolution, for example, 2880 dpi is directly specified. Further, the "beautiful" corresponds also to "print condition in which unidirectional printing is performed" recited in the claims. The "print condition in which unidirectional printing is performed" may be such that for example, the unidirectional printing is directly specified.

Next, a print control program will be described.

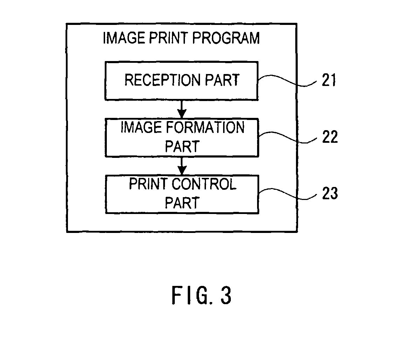

Fig. 3 is a block diagram showing the logical structure of the print control program.

A reception part 21 is a module to cause the control part 14 to function as the reception unit, and controls the display part 13 to display a menu for selection of a print condition. The user operates the operation part 12 to select the print condition, and the reception part 21 receives the print condition corresponding to the operation of the operation part 12.

An image formation part 22 is a module to cause the control part 14 to function as the image formation unit, and performs the de-mosaic processing of the raw image data of an area image sensor to form the color image data.

A print control part 23 is a module to control the printer engine 17 to print a color image based on the print condition.

Next, the processing of the printer 1 will be described.

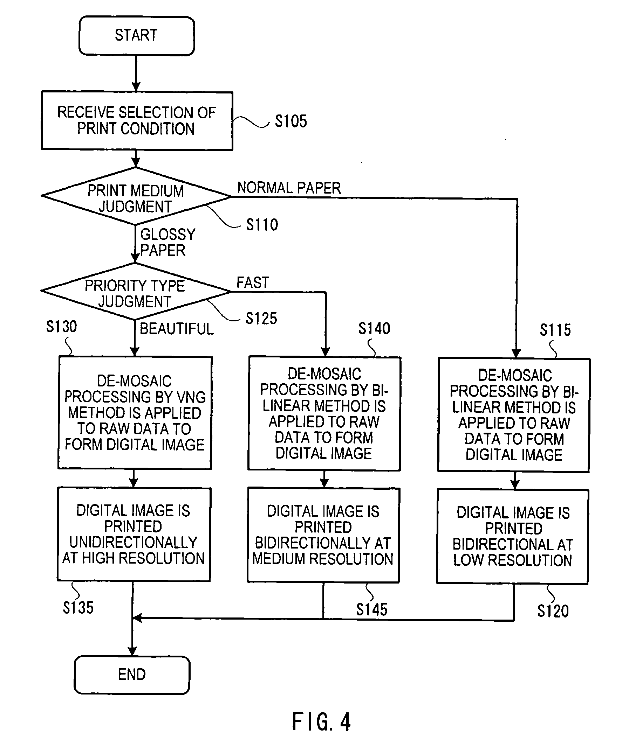

Fig. 4 is a flowchart showing the flow of the processing of the printer 1.

At S105, the control part 14 executes the reception part 21, and receives the selection of the print condition.

At S110, the control part 14 executes the image formation part 22, and judges the kind of the selected print medium. In the case where the "normal paper" is selected, advance is made to S115, and in the case where the "glossy paper" is selected, advance is made to S125.

At S115, the control part 14 executes the image formation part 22, and applies the de-mosaic processing by the bi-linear method to the raw image data to form color image data.

At S120, the control part 14 executes the print control part 23, applies the various image processings to the color image data in cooperation with the image processing part 16 to create the print data, controls the printer engine 17 based on the print data, and performs the bidirectional printing of the color image at a low resolution.

At S125, the control part 14 executes the image formation part 22, and judges the selected priority type. In the case where the "beautiful" is selected, advance is made to S130, and in the case where the "fast" is selected, advance is made to S140.

At S130, the control part 14 executes the image formation part 22, applies the de-mosaic processing by the VNG method to the raw image data, and forms color image data.

At S135, the control part 14 executes the print control part 23, applies the various image processings to the color image data in cooperation with the image processing part 16 to create print data, controls the printer engine 17 based on the print data, and performs the unidirectional printing of the color image at a high resolution.

At S140, the control part 14 executes the image formation part 22, applies the de-mosaic processing by the bi-linear method to the raw image data, and forms color image data.

At S145, the control part 14 executes the print control part 23, applies the various image processings to the color image data in cooperation with the image processing part 16 to create print data, controls the printer engine 17 based on the print data, and performs the bidirectional printing of the color image at a medium resolution.

According to the print control method of the embodiment of the invention described above, for example, when the "fast" is selected, since the printer 1 prints the color image data by the low image quality printing method, the algorithm of the de-mosaic processing is changed to the bi-linear method. On the other hand, when the "beautiful" is selected, since the printer 1 prints the color image data by the high image quality printing method, the algorithm of the de-mosaic processing is changed to the VNG method. As stated above, in the print control method of the embodiment of the invention, the de-mosaic processing can be performed by the algorithm suitable for the printing method. By this, waste in the de-mosaic processing can be eliminated in the case where the color image data is printed by the low image quality printing method, the raw image data can be printed in a short time, and the request of the user who desires the high image quality printing can be satisfied.

In this embodiment, although the description has been made while the bi-linear method or the VNG method is used as an example of the algorithm of the interpolation processing, the algorithm of the interpolation processing is not limited to these, but may be another algorithm. As the algorithm of the interpolation processing, many algorithms have been proposed. For example, a Constant Hue based Interpolation method, a Median based Interpolation method, an Adaptive Color Plan Interpolation method and the like are known. Among the algorithms of the interpolation processing, the bilinear method is the simplest algorithm, and color image data can be formed in the shortest time, however, the image quality is lowest. Specifically, in the bi-linear method, for example, false color, moire, lack of sharpness, jaggy of an edge and the like are most liable to occur, and therefore, it is lowest in image quality. Accordingly, for example, when the "fast" is selected, a changeover may be made to the bi-linear method, and when the "beautiful" is selected, a changeover may be made to one of the foregoing algorithms.

Besides, although the description has been given to the example in which the algorithm of the interpolation processing is changed, the algorithm of the interpolation processing is common to all print conditions, and an algorithm of processing other than the interpolation processing in the de-mosaic processing may be changed according to the print condition. For example, in the case where printing is performed at a low resolution, the algorithm of the correction processing is changed to an algorithm in which a filter processing to suppress moire and false color is not executed, and only in the case where printing is performed at a high resolution, a changeover may be made to an algorithm to execute the filter processing. Besides, in the case where printing is performed at a low resolution, the algorithm of the correction processing is changed to an algorithm in which a uniform filter processing is performed over the whole image without detecting an edge direction of luminance components in the filter processing for suppressing moire and false color, and in the case where printing is performed at a high resolution, a changeover may be made to an algorithm in which a filter processing for suppressing moire and false color is executed while an application range of a filter is dynamically changed according to the edge direction of luminance components.

Besides, for example, in the case where a changeover is performed between two algorithms other than the bi-linear method, by using a well-known method for evaluating algorithm, a judgment can be made as to which of algorithms is made a high image quality algorithm. Specifically, a method is well known in which with respect to each pixel of high image quality original image data, a reverse processing is performed such that a channel to be interpolated by the de-mosaic processing is removed to create raw image data, the raw image data is subjected to the de-mosaic processing by an algorithm of an evaluation object to form color image data, and the original image and the formed color image data are compared with each other. As a standard for evaluation of a difference between the original image data and the formed color image data, the standard of PSNR (Peak Signal to Noise Ratio) or ΔE₀₀ is well known. In general, in the three methods of the VNG method, the Median based Interpolation method, and the Adaptive Color Plan Interpolation method, as compared with the bi-linear method and the Constant Hue based Interpolation method, better evaluation results can be obtained in many original images. However, it is generally difficult to determine superiority or inferiority among the VNG method, the Median based Interpolation method and the Adaptive Color Plan Interpolation method. This is because in these three algorithms, evaluation results vary according to original images, for example, the Median based Interpolation method is superior in a certain original image, and the Adaptive Color Plan Interpolation method is superior in another certain original image. However, in these three algorithms, as compared with at least the bi-linear method and the Constant Hue based Interpolation method, better evaluation results can be obtained for many original images. Accordingly, in the case where a print condition in which printing is performed by a low image quality printing method is selected, the algorithm of the interpolation processing may be changed to one of the bi-linear method and the Constant Hue based Interpolation method, and in the case where a print condition in which printing is performed by a high quality printing method is selected, the algorithm of the interpolation processing may be changed to one of the VNG method, the Median based Interpolation method, and the Adaptive Color Plan Interpolation method. All of the VNG method, the Median based Interpolation method and the Adaptive Color Plan Interpolation method are algorithms in which tone values of the other two channels of a noted pixel are interpolated by considering magnitudes of surrounding edges of the noted pixel, that is, algorithms in which the edges are considered. On the other hand, the bi-linear method and the Constant Hue based Interpolation method are algorithms in which the edges are not considered. When the edge is considered, as compared with the case where the edge is not considered, color image data of high image quality is obtained. Thus, in the case where a print condition in which printing is performed by a low image quality printing method is selected, a changeover may be made to an algorithm in which an edge is not considered, and in the case where a print condition in which printing is performed by a high quality printing method is selected, a changeover may be made to an algorithm in which an edge is considered.

In addition, for example, there is generally a tendency that with respect to one noted pixel, as the number of nearby pixels to which reference is made is large, color image data of high image quality is formed. Thus, an algorithm in which the number of nearby pixels to which reference is made is large may be made an algorithm in which color image data of high image quality is formed, and an algorithm in which the number of nearby pixels to which reference is made is relatively small may be made an algorithm in which color image data of low image quality is formed.

Besides, for example, there is generally a tendency that with respect to one noted pixel, when reference is made to nearby pixels in a wide range to some extent, color image data of high image quality is formed. Thus, an algorithm in which reference is made to nearby pixels in a wide range may be made an algorithm in which color image data of high image quality is formed, and an algorithm in which reference is made to nearby pixels in a relatively narrow range may be made an algorithm in which color image data of low image quality is formed.

Besides, for example, there is generally a tendency that with respect to one noted pixel, as the number of directions in which reference is made is large, color image data of high image quality is formed. Thus, an algorithm in which reference is made to many directions may be made an algorithm in which color image data of high image quality is formed, and an algorithm in which reference is made to a relatively small number of directions may be made an algorithm in which color image data of low image quality is formed. Specifically, for example, with respect to one noted pixel, the upper-left, upper, upper-right, right, lower-right, lower, lower-left, and left eight directions exist as directions to which reference can be made, and an algorithm in which nearby pixels are selected from more directions may be made an algorithm in which color image data of high image quality is formed. For example, in the foregoing VNG method, since the number of directions to which reference is made is large as compared with the bi-linear method, it becomes an algorithm in which color image data of relatively high image quality is formed.

Besides, for example, there is generally a tendency that the number of procedures of an algorithm is large, color image data of high image quality is formed. Thus, a processing time is measured under the same condition, and an algorithm in which the processing time is long may be made an algorithm in which color image data of high image quality is formed, and an algorithm in which the processing time is relatively short may be made an algorithm in which color image data of low image quality is formed.

Besides, in this embodiment, although the description has been made while using the example in which the print condition includes the kind of a print medium and the priority type, the print condition may be the size of an image to be printed. Specifically, when color image data of low image quality is printed in a large image size, the poor image quality is noticeable. However, when printing is performed in a small image size, the poor image quality is not very noticeable. Thus, when a small image size is selected, a changeover is made to an algorithm in which color image data of low image quality is formed, so that waste in the de-mosaic processing can be eliminated, and the raw image data can be printed in a short time. In the small image size, since the poor image quality is not noticeable, and the resolution itself is not changed, the user feels that the image quality is not low. However, since pixels are thinned and the image is printed with a small number of dots, the printing method is a low image quality printing method.

Besides, in this embodiment, although the description has been made while using the stand-alone printer as an example of the print control apparatus, the invention may be applied to a so-called compound machine in which a printer and an image scanner are integrated.

Besides, although the description has been made while using the printer as an example of the print control apparatus, the print control apparatus may be, for example, a digital camera. Specifically, the invention may be applied to a digital cameral in which photographed raw image data is subjected to de-mosaic processing to form color image data, and printing is performed by controlling a printer which is connected by a USB cable or the like to be capable of communicating.

One of ordinary skill in the art would conceive combinations and subcombinations of the foregoing various embodiments within the scope not departing from the scope of the invention and the intention thereof.

The aforegoing description has been given by way of example only and it will be appreciated by a person skilled in the art that modifications can be made without departing from the scope of the present invention.

## Claims

1. A print control method comprising:
receiving selection of a print condition; and
changing an algorithm of a de-mosaic processing according to the print condition when color image data is formed by performing the de-mosaic processing of raw image data obtained by digitizing an output signal of a color area image sensor.

2. The print control method according to claim 1, wherein when the algorithm of the de-mosaic processing is changed, a changeover is made between an algorithm in which color image data of relatively low image quality is formed and an algorithm in which color image data of relatively high image quality is formed.

3. The print control method according to claim 2, wherein the algorithm in which the color image data of low image quality is formed is an algorithm in which a surrounding edge of a noted pixel is not considered in interpolation of a tone value of the noted pixel, and the algorithm in which the color image data of high image quality is formed is an algorithm in which a surrounding edge of a noted pixel is considered in interpolation of a tone value of the noted pixel.

4. The print control method according to claim 1, wherein when the algorithm of the de-mosaic processing is changed, in a case where as the print condition, a print condition in which printing is performed at a relatively low resolution is selected, a changeover is made to an algorithm in which color image data of relatively low image quality is formed, and in a case where as the print condition, a print condition in which printing is performed at a relatively high resolution is selected, a changeover is made to an algorithm in which color image data of relatively high image quality is formed.

5. The print control method according to claim 1, wherein when the algorithm of the de-mosaic processing is changed, in a case where as the print condition, a print condition in which bidirectional printing is performed is selected, a changeover is made to an algorithm in which color image data of relatively low image quality is formed, and in a case where as the print condition, a print condition in which unidirectional printing is performed is selected, a changeover is made to an algorithm in which color image data of relatively high image quality is formed.

6. The print control method according to claim 1, wherein when the algorithm of the de-mosaic processing is changed, in a case where print speed priority is selected as the print condition, a changeover is made to an algorithm in which color image data of relatively low image quality is formed, and in a case where image quality priority is selected as the print condition, a changeover is made to an algorithm in which color image data of relatively high image quality is formed.

7. The print control method according to claim 1, wherein
when the selection of the print condition is received, selection of a kind of a print medium on which the color image is to be printed is received as the print condition, and
when the algorithm of the de-mosaic processing is changed, the algorithm is changed according to the kind of the print medium.

8. A print control apparatus comprising:
a reception unit that receives selection of a print condition; and
an image formation unit that changes an algorithm of a de-mosaic processing according to the print condition and forms color image data by performing the de-mosaic processing of raw image data obtained by digitizing an output signal of an area image sensor.

9. A print control program product to cause a computer to function as:
a reception unit that receives selection of a print condition; and
an image formation unit that changes an algorithm of a de-mosaic processing according to the print condition and forms color image data by performing the de-mosaic processing of raw image data obtained by digitizing an output signal of an area image sensor.
